# EUROPÄISCHE PATENTSCHRIFT

(11) **EP 0 546 250 B1**
(45) Veröffentlichungstag und Bekanntmachung des Hinweises auf die Patenterteilung: **12.04.1995**
(21) Anmeldenummer: 92111593.7
(22) Anmeldetag: 08.07.1992
(51) Int. Cl.: B01D 46/00, B01D 46/18, B01D 46/22

(54) **Vorrichtung zur Abgasreinigung**
Apparatus for cleaning gas
Dispositif d'épuration de gaz

(30) Priorität: 10.12.1991 DE 4140612
(43) Veröffentlichungstag der Anmeldung: 16.06.1993
(73) Patentinhaber: Firma Carl Freudenberg, 69469 Weinheim (DE)
(72) Erfinder: Spies, Karl-Heinrich, Dr., W-6943 Birkenau (DE); Kurr, Klaus, Dr., W-6940 Weinheim (DE)

(56) Entgegenhaltungen:
- US-A- 2 211 812
- US-A- 2 218 453
- US-A- 2 639 780
- US-A- 3 745 748
- PATENT ABSTRACTS OF JAPAN vol. 7, no. 246 (M-253)(1391) 2. November 1983 & JP-A-58 132 399 (KENZOU KAKOYA) 6. August 1983

## Beschreibung

Die Erfindung betrifft eine Vorrichtung zur Abgasreinigung an einer Verbrennungsanlage, umfassend einen Rußfilter, der in einer Abgaseinrichtung angeordnet ist, wobei der Rußfilter im wesentlichen aus einem, in einer ersten Zone von dem Abgas durchströmten, flexiblen Filterband besteht und mittels eines Antriebes kontinuierlich oder diskontinuierlich vorwärts bewegbar und erneuerbar ist.

Eine derartige Vorrichtung zur Reinigung von Abgas ist aus der DE-OS 38 37 696 bekannt. Die darin beschriebene Rußfilteranlage für Dieselmotor-Abgase weist ein Filterband aus organischem oder anorganischem Material in Form von Faservliesbändern auf, die so beschaffen sind, daß im Abgas befindliche Ruß- und andere Schadstoffpartikel aus dem durchströmenden Abgas ausgefilter werden. Dabei ist allerdings zu beachten, daß das mit Schadstoffen beladene Filterband auf eine Spule aufgewickelt und einer externen Entsorgung zugeführt wird. Eine externe Entsorgung von Schadstoffpartikeln und Filterband ist allerdings sehr aufwendig und umständlich und in wirtschaftlicher Hinsicht wenig befriedigend. Die Abgase, die bei der externen Entsorgung von Filterband und Partikeln entstehen, sind erneut zu filtern, wodurch ein zusätzlicher Aufwand bedingt ist. Außerdem sind die Gebrauchseigenschaften der vorbekannten Rußfilteranlage für Dieselmotoren wenig befriedigend, da das Filterband direkte mit hohen Temperaturen und Drücken beaufschlagt wird. Bei funktionsfähiger Ausbildung des Filtermaterials sind die Betriebskosten außerordentlich hoch und aufgrund der Ausgestaltung ist mit Ungenauigkeiten bei der Bandsteuerung zu rechnen.

Der Erfindung liegt die Aufgabe zugrunde, eine Vorrichtung zu zeigen, bei der die vorgenannten Nachteile nicht auftreten. Die Vorrichtung sollte insbesondere ein kostengünstiges, bauraumsparendes Verfahren ermöglichen, das einerseits eine Entsorgung von Filterband und Partikeln im Filtersystem selbst erlaubt und andererseits gute Gebrauchseigenschaften während der bestimmungsgemäßen Verwendung aufweist.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Bei der erfindungsgemäßen Vorrichtung zur Abgasreinigung an einer Verbrennungsanlage ist es vorgesehen, daß das Filterband zumindest in der ersten Zone durch ein flexibles, gasdurchlässiges und Zugspannung aufnehmendes Endlostransportband abgestützt und durch das Transportband in Bewegung versetzbar ist und daß das Filterband und die von ihm aus dem Abgas ausgeschiedenen Partikeln in einer zweiten Zone gemeinsam verbrennbar sind. Hierbei ist von Vorteil, daß sowohl das Filterband selbst, als auch der auf diesem befindliche Filterkuchen in Form ausgefilterter Partikel in der Filtereinrichtung selbst entsorgt werden. Der Tranport des Filterbandes erfolgt dabei mit Hilfe eines Endlostransportbandes, das beispielsweise aus einem dünnen, biegeelastischen und mit Poren versehene Stahlblech bestehen kann. Dadurch, daß das Filterband zumindest in der ersten Zone durch das Endlostransportband abgestützt ist, braucht das Filterband selbst nicht sehr stabil ausgeführt zu werden, was die Betriebskosten des Systems im Vergleich zu dem aus dem Stand der Technik bekannten System wesentlich verringert. Bei der Materialbeschaffenheit des Filterbandes braucht nur auf gute Filtereigenschaften geachtet zu werden.

Gemäß einer vorteilhaften Ausgestaltung kann das Endlostransportband im Bereich seiner seitlichen Begrenzungen jeweils eine Perforierung über die gesamte Länge aufweisen, die während der bestimmungsgemäßen Verwendung vom Filterband nicht überdeckt ist, wobei die Perforation mit entsprechend gestalteten Zähnen des Antriebes in Eingriff bringbar ist. Der Antrieb kann beispielsweise ähnlich gestaltet sein, wie die Transportrommel zum Aufwickeln eines Filmes in einer Kamera. Eine besonders genaue Bandsteuerung ist dadurch gewährleistet.

Gemäß einer weiteren, vorteilhaften Ausgestaltung, ist es vorgesehen, daß der Antrieb elektrisch betätigbar und signalleitend mit einem elektronischen Steuergerät verbunden ist. Die Steuerung der Antriebstrommel sowie sämtliche Funktionen innerhalb des Rußfilters, die in einer zeitlichen Abfolge erfolgen, sind dadurch besonders einfach ausführbar.

Vorrichtungen, die ebenfalls durch das Steuergerät signalleitend betätigbar sind, werden durch die Zündvorrichtung innerhalb der zweiten Zone gebildet, sowie durch ein elektrisch angetriebenes Frischluftgebläse und eine Fördervorrichtung für das partikelbeladene Filterband in die zweite Zone. Zur Steuerung der Prozessabläufe ist eine elektronische Steuerung von großem Vorteil.

Desweiteren kann das Steuergerät signalleitend mit zumindest einem Sensor verbunden sein, der eine Eingangsgröße beschreibt. Im Falle der vorliegenden Erfindung sind die Eingangsgrößen durch zwei Druckfühler gebildet, wobei einer der Druckfühler einerseits des Filterbandes im ungefilterten Abgasstrom und einer der Druckfühler andererseits des Filterbandes im gefilterten Abgasstrom angeordnet ist. In Abhängigkeit vom Differenzdruck kann beispielsweise der Antrieb von Endlostransportband und darauf angeordnetem Filterband erfolgen.

Zur Erzielung einer möglichst effizienten Filterung von Schadstoffpartikeln aus dem ausströmenden Abgas kann das Filterband im Strömungsbereich des abströmenden Abgases zur Vergrößerung der wirksamen Filterfläche zumindest einmal umgelenkt sein. Die Filterleistung der Vorrichtung kann durch Umlenkungen besonders vorteilhaft angehoben werden. Allerdings ist selbstverständlich darauf zu achten, daß eine sinnvolle Größe des Rußfilters nicht überschritten wird.

Die elektronische Steuerung kann beispielsweise in die Motorsteuerung einer Verbrennungskraftmaschine integriert sein.

Die zweite Zone des Rußfilters ist derart gestaltet, daß das partikelbeladene Filterband über einen Rost aus metallischem oder keramischem Werkstoff geführt ist, daß in Strömungsrichtung des Gebläseluftstromes hinter dem Rost ein von dem Rußfilter trennbarer Aschekasten angeordnet ist, daß die Fördervorrichtung durch eine Transporttrommel gebildet ist, mit zumindest zwei gleichmäßig am Umfang verteilten Förderarmen und daß die Transporttrommel während der bestimmungsgemäßen Verwendung im wesentlichen die gleiche Drehzahl aufweist, wie der Antrieb des Transportbandes. Im Rahmen der vorliegenden Erfindung ist es vorgesehen, daß das Filterband diskontinuierlich von der ersten Zone in die zweite Zone des Rußfilters gefördert wird. Durch die Druckdifferenz zwischen Vorder- und Rückseite des Filters wird jeweils gewährleistet, daß das Filtervlies fest auf das Endlostransportband gepreßt wird und keine Leckageströme des ungereinigten Abgases am Filter vorbei entstehen können. In der zweiten Zone werden das Filtervlies und die auf dem Filtervlies befindlichen Schadstoffpartikel durch Drehung der Transporttrommel bewegt. Um ein Übergreifen der Verbrennung in die erste Zone auszuschließen, sind der Transporttrommel am Umfang zumindest zwei Förderarme zugeordnet, die die zweite Zone vom Bereich des ungefilterten Abgases trennen. Gemäß einer vorteilhaften Ausgestaltung, ist es vorgesehen, daß die Transporttrommel zur Förderung des Filterbandes in die zweite Zone eine geringfügig höhere Drehzahl aufweist, als der Antrieb des Endlostransportbandes. Dieser geringe Drehzahlunterschied bewirkt, daß das partikelbeladene Filterband ohne Faltenbildung in die zweite Zone gefördert wird. Durch eine Kopplung der beiden Antriebe ist die Steuerung des erfindungsgemäßen Rußfilters besonders einfach.

Die Vorrichtung und das Verfahren zur Abgasreinigung an einer Verbrennungsanlage werden im folgenden anhand der als Anlage beigefügten Zeichnungen weiter verdeutlicht.
Figur 1 zeigt eine schematische Darstellung der erfindungsgemäßen Abgasreinigungsanlage als Beispiel.
Figur 2 zeigt den Rußfilter aus Figur 1 im eingebauten Zustand als Bestandteil einer Auspuffanlage;
Figur 3 zeigt einen vergrößerten Ausschnitt aus dem in Figur 2 dargestellten Transportband;
Figur 4 zeigt einen vergrößerten Ausschnitt aus der zweiten Zone des erfindungsgemäßen Rußfilters.

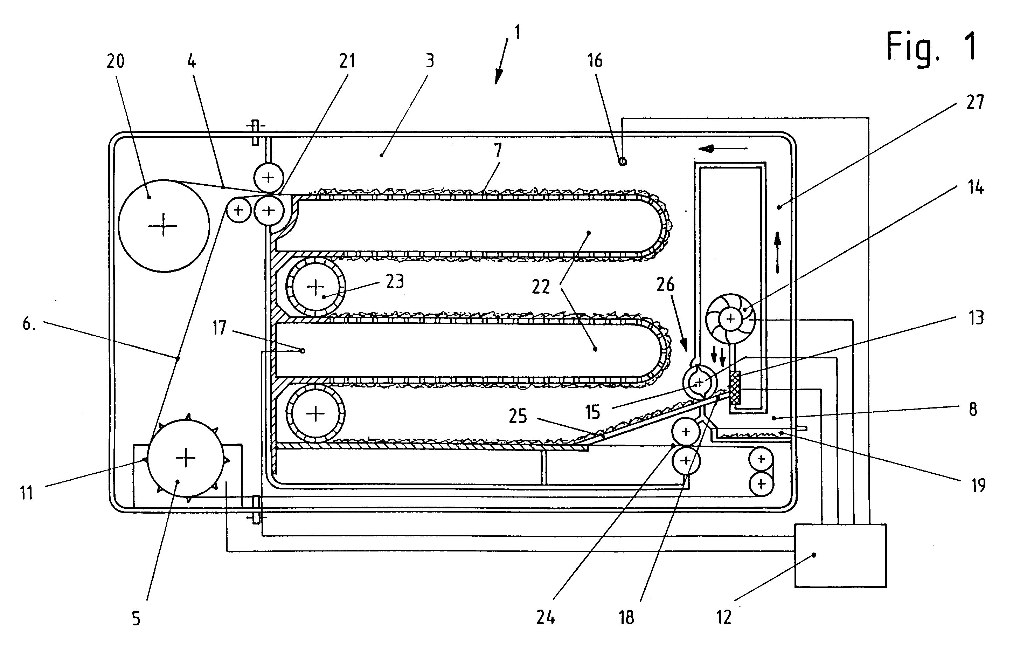

Figur 1 zeigt den Schnitt durch einen beispielhaften Rußfilter 1. Dabei wird das flexible Filterband 4 von einer Rolle 20 abgerollt und vor Eintritt in die durch verunreinigtes Abgas durchströmte erste Zone 3 mit dem Endlostransportband 6 vereinigt und durch die Eintrittsschleuse 21 geführt.

Das Endlostransportband 6, das beispielsweise aus einem dünnen, biegeelastischen und mit Poren versehenen Stahlblech bestehen kann, dient einerseits zur Aufnahme des Differenzdruckes zwischen Vorder- und Rückseite des Filterbandes 4 sowie zur Aufnahme der Zugkräfte beim Transport des Filterbandes 4 durch die erste Zone 3 in die zweite Zone 8 des Rußfilters 1.

Die Eintrittsschleuse 21 kann beispielsweise aus zwei Walzen bestehen, zwischen die das Filterband 4 und das Endlostransportband 6, eventuell unter leichter Vorspannung der Walzen gegeneinander, in die dicht abgesperrte erste Zone 3 für das ungefilterte Abgas eingeführt werden. Der eigentliche Filterträger besteht aus einem oder mehreren scheibenförmigen Kammern 22, die mit einer Vielzahl von Öffnungen versehen sind, durch die das gefilterte Abgas eintritt. Von dort wird das gefilterte Abgas in den weiterführenden Teil der Abgasanlage geleitet und tritt anschließend, frei von rußförmigen Partikeln 7 in die Atmosphäre aus. Auf den Stirnseiten der scheibenförmigen Kammern 22 wird das Filterband 4 um 180° umgelenkt und nach Weiterführung im gezeigten Beispiel über eine rotierende Walze 23 ebenfalls um 180° umgelenkt. Die Umlenkung über die Walzen 23 bewirkt eine vergrößerte Filterfläche bei geringen Abmessungen des Rußfilters 1. In Abhängigkeit von den Gegebenheiten des Anwendungsfalles ist es auch möglich, das Filterband 4 nur einmal umzulenken. Dadurch wird eine sehr flache Bauweise erzielt, die beispielsweise bei speziell ausgestalteten Fahrzeugböden Vorteile aufweisen kann.

Im vorliegenden Fall erfolgt nach mehrmaliger Umlenkung im Bereich der ersten Zone 3, unmittelbar vor Eintritt in die zweite Zone 8, eine Trennung von Filterband 4 mit den ausgefilterten Partikeln 7 vom Endlostransportband 6. Das Endlostransportband 6 wird durch eine Austrittsschleuße 24 geführt und über mehrere Umlenkrollen zum Antrieb 5 zurück. Das vom Endlostransportband 6 abgeschälte Filterband 4 mit den darauf angeordneten Partikeln 7 wird im vorliegenden Falle über eine Rampe 25 zu einer Entsorgungsschleuse 26 transportiert, hinter der das Filterband 4 und die Partikel 7 von einer Zündeinrichtung 13 gezündet und durch Zuführung von Luft gemeinsam mit hohem Luftüberschuß (saubere Verbrennung, niedrige Abgastemperatur) verbrannt werden. Das bei dieser Verbrennung entstehende Abgas wird über einen, in diesem Falle senkrecht aufsteigenden Abgaskanal 27 dem ungefilterten Abgasstrom beigemischt. Die kompakten Abmessungen und die gemeinsame Entsorgung des Filterbandes 4 und ausgeschiedener Partikel 7 sind von hervorzuhebender Bedeutung.

Die Steuerung der Anlage erfolgt mit einem elektronischen Steuergerät 12, bei dem z.B. der Druck durch einen ersten Drucksensor 16 vor dem Filter und durch einen zweiten Drucksensor 17 hinter dem Filterband 4 gemessen wird und durch Verknüpfung der beiden Größen der Antrieb 5 des Endlostransportbandes 6 gestartet werden kann. Auch die Zündung 13 sowie das Frischluftgebläse 14 werden durch das Steuergerät 12 geschaltet.

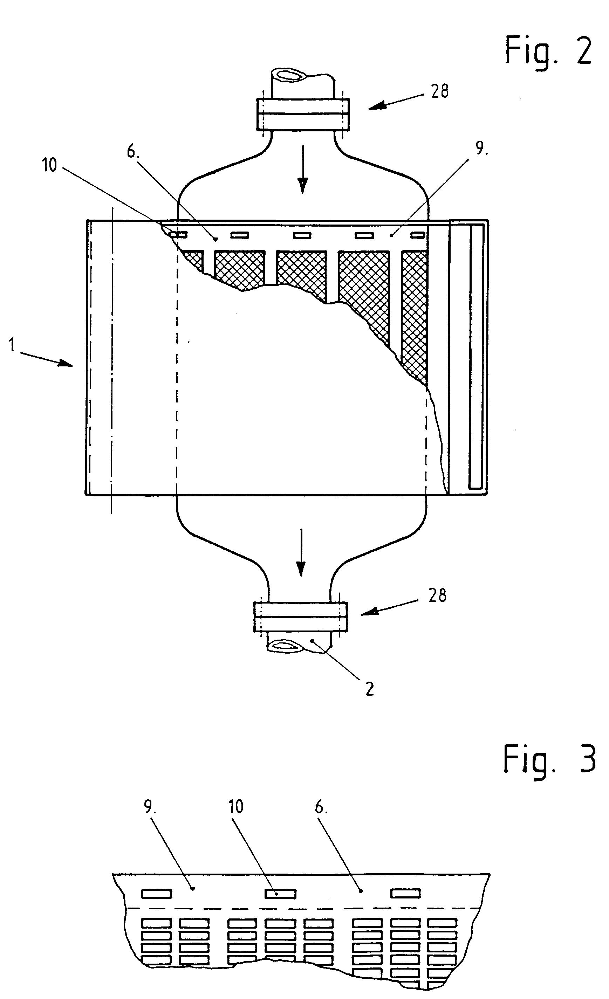

In Figur 2 ist die Ansicht eines Filters von oben in teilweise geschnittener Darstellung gezeigt. Dabei ist zu erkennen, daß das unmittelbar vor dem Auspuffende eines Motors (niedriges Temperaturniveau des Abgasstromes) befindliche Rußfilter auf einfache Weise getauscht werden kann, wobei lediglich zwei Anschlüsse 28 sowie ein nicht gezeigter elektrischer Steckanschluß getrennt bzw. verbunden werden müssen.

Außerdem ist in Figur 2 das Endlostransportband 6 zu erkennen, das im Bereich seiner seitlichen Begrenzungen 9 eine Perforation 10 aufweist, in die entsprechende Zähne 11 des Transportantriebes 5 gemäß Figur 1 eingreifen. Bei der Entsorgung in der zweiten Zone 8 wird das Filterband 4 vorzugsweise immer um feste Abschnitte voranbewegt, so daß bei der Entsorgung immer konstante Längen des beladenen Filtervlieses entsorgt werden können und die Abdichtung im Bereich der Eintrittsschleuse 21 und der Austrittsschleuse 24 besser gewährleistet ist.

In Figur 3 ist das Endlostransportband 6 in vergrößerter Darstellung gezeigt. In gestrichelten Linien ist die Außenkante des auf dem Transportbandes 6 angeordneten Filterbandes 4 eingezeichnet. Wie in Figur 3 deutlich zu erkennen, ist die Perforation 10 im Bereich der seitlichen Begrenzungen 9 des Transportbandes 6 während der bestimmungsgemäßen Verwendung nicht vom Filterband 4 überdeckt.

Durch die Druckdifferenz beiderseits des Filterbandes 4 wird gewährleistet, daß das Filterband 4 fest auf das Endlostransportband 6 gepreßt wird und keine Leckageströmung des ungereinigten Abgases - am Filter vorbei - entstehen kann.

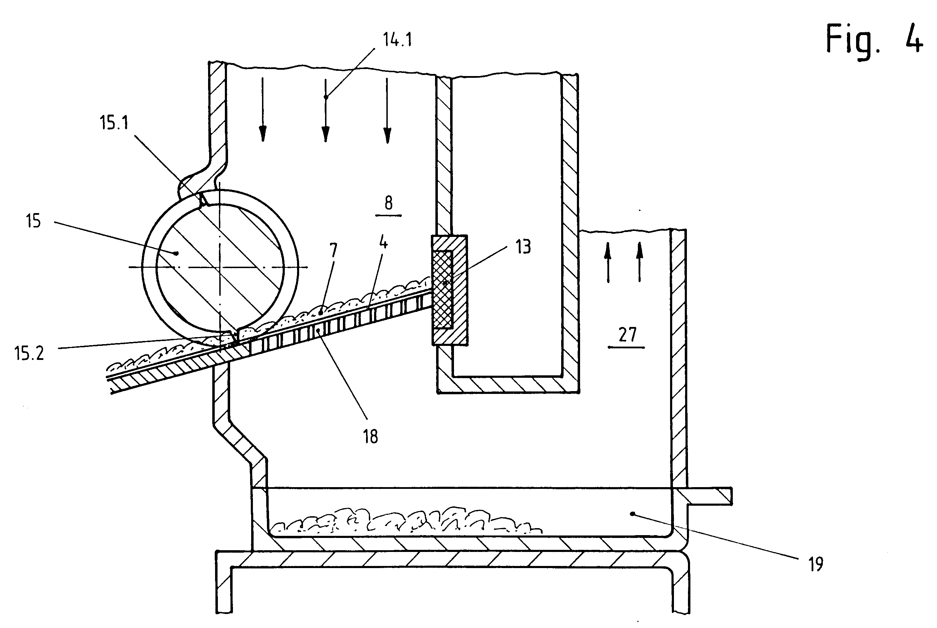

In Figur 4 ist eine vergrößerte Darstellung der zweiten Zone 8 des Rußfilters 1 gezeigt. Das Filterband 4 mit den darauf angeordnete Partikeln 7 wird mit Hilfe des in dieser Darstellung nicht gezeigten Steuergerätes und einem hier nicht näher dargestellten Antrieb, der beispielsweise mit dem Antrieb des Endlostransportbandes 6 gekoppelt sein kann, durch Drehung der Fördervorrichtung 15 um 180° in die zweite Zone 8 transportiert. Um ein Übergreifen der Verbrennung auf die erste Zone 3 auszuschließen, ist die Fördervorrichtung 15 am Umfang mit einer messerförmigen Einrichtung 15.1/15.2 versehen, die eine sichere räumliche Trennung von erster Zone 3 und zweiter Zone 8 gewährleistet. Das in die zweite Zone 8 gelangende Filterband 4 mit Partikel- Filterkuchen wird über einen Rost 18 geschoben und auf seiner Stirnseite durch die Zündeinrichtung 13 gezündet. Diese Zündeinrichtung 13 kann in ähnlicher Weise wie ein Zigarettenanzünder im Kraftfahrzeug arbeiten. Alternativ sind jedoch andere Zündeinrichtungen, wie beispielsweise eine Flammzündanlage einsetzbar. Das entzündete Faservlies sowie der Partikel-Filterkuchen werden von oben mit einem vergleichsweise großen Luftstrom 14.1 aus dem Frischluftgebläse 14 beaufschlagt, so daß sich eine saubere Verbrennung bei großem Luftüberschuß und niedriger, mittlerer Abgastemperatur im Bereich von weniger als 300°C ergibt.

Das bei diesem Vorgang entstehende Abgas wird über einen aufsteigenden Abgaskanal 27 dem unverbrannten Abgasstrom, der noch zu reinigen ist, beigemischt. Die bei der Verbrennung des Filterbandes 4 entstehenden Aschebestandteile werde in einem, im unteren Teil des Rußfilters 1 angeordneten Aschekasten 19 aufgefangen, der in zeitlichen Intervallen, beispielsweise im Zusammenhang mit der Einführung einer mit Filtervlies geladenen Rolle 20, entsorgt wird. In diesem Zusammenhang sei nochmals darauf hingewiesen, daß es sich bei dem hier abgebildeten System lediglich um ein Beispiel handelt.

## Patentansprüche

1. Vorrichtung zur Abgasreinigung an einer Verbrennungsanlage, umfassend einen Rußfilter (1), der in einer Abgaseinrichtung angeordnet ist, wobei der Rußfilter im wesentlichen aus einem in einer ersten Zone (3) von dem Abgas durchstörmten, flexiblen Filterband (4) besteht und mittels eines Antriebes (5) kontinuierlich oder diskontinuierlich vorwärtsbewegbar und erneuerbar ist, dadurch gekennzeichnet, daß das Filterband (4) zumindest in der ersten Zone (3) durch ein flexibles, gasdurchlässiges und Zugspannungen aufnehmendes Endlostransportband (6) abgestützt und durch das Endlostransportband (6) in Bewegung versetzbar ist und daß das Filterband (4) und die von ihm aus dem Abgas ausgeschiedenen Partikel (7) in einer zweiten Zone (8) gemeinsam verbrennbar sind.

2. Vorrichtung nach Anspruch 1, dadurch gekennzeichnet, daß das Endlostransportband (6) im Bereich seiner seitlichen Begrenzungen (9) jeweils eine Perforation (10) über die gesamte Länge aufweist, daß das Filterband (4) die Perforation (10) während der bestimmungsgemäßen Verwendung nicht überdeckt und daß die Perforation (10) mit entsprechend gestalteten Zähnen (11) des Antriebes (5) in Eingriff bringbar ist.

3. Vorrichtung nach Anspruch 1 bis 2, dadurch gekennzeichnet, daß der Antrieb (5) elektrisch betätigbar und signalleitend mit einem elektronischen Steuergerät (12) verbunden ist.

4. Vorrichtung nach Anspruch 3, dadurch gekennzeichnet, daß das Steuergerät (12) signalleitend mit einer Zündvorrichtung (13) innerhalb der zweiten Zone (8), mit einem elektrisch angetriebenen Frischluftgebläse (14) und einer Fördervorrichtung (15) für das partikelbeladene Filterband (4) in die zweite Zone (8) verbunden ist.

5. Vorrichtung nach Anspruch 3 bis 4, dadurch gekennzeichnet, daß das Steuergerät (12) signalleitend mit zumindest einem Sensor verbunden ist, der eine Eingangsgröße beschreibt.

6. Vorrichtung nach Anspruch 5, dadurch gekennzeichnet, daß die Eingangsgröße durch zwei Druckfühler (16, 17) gebildet ist, und daß einer der Druckfühler (16) einerseits des Filterbandes (4) im ungefilterten Abgasstrom und einer der Druckfühler (17) andererseits des Filterbandes (4) im gefilterten Abgasstrom angeordnet ist.

7. Vorrichtung nach Anspruch 1 bis 6, dadurch gekennzeichnet, daß das Filterband (4) im Strömungsbereich des abströmenden Abgases zur Vergrößerung der wirksamen Filterfläche zumindest einmal umgelenkt ist.

8. Vorrichtung nach Anspruch 1 bis 7, dadurch gekennzeichnet, daß das partikelbeladene Filterband (4) in der zweiten Zone (8) über einen Rost (18) aus metallischem oder keramischem Werkstoff geführt ist, daß in Strömungsrichtung des Gebläseluftstromes hinter dem Rost (18) ein von dem Rußfilter (1) trennbarer Aschekasten (19) angeordnet ist und daß die Fördervorrichtung (15) durch eine Transporttrommel gebildet ist, mit zumindest zwei gleichmäßig am Umfang verteilten Förderarmen (15.1, 15.2) und daß die Transporttrommel während der bestimmungsgemäßen Verwendung im wesentlichen die gleiche Drehzahl aufweist, wie der Antrieb (5) des Endlostransportbandes (6).

9. Verfahren zur Reinigung von Abgas mit einer Vorrichtung nach Anspruch 1 bis 8, dadurch gekennzeichnet, daß das Filterband (4) und das Endlostransportband (6) durch eine Eintrittsschleuse (21) in die erste Zone (3), die ungereinigtes Abgas enthält, geführt werden, daß das Filterband (4) und das Endlostransportband (6) durch die unterschiedlichen Drücke beiderseits von Filterband (4) und Transportband (6) aneinander angelegt werden, daß die beiden Bänder (4, 6) zwecks Vergrößerung der wirksamen Filterfläche über zumindest eine Umlenkrolle (23) geführt sind, daß das Filterband (4) nach der letzten Umlenkung vom Transportband (6) abgehoben und in eine zweite Zone (8) geführt wird, in dem das Filterband (4) und die Partikel (7) durch Zündung (13) und unter Zuführung von Frischluft verbrannt werden, daß die festen Verbrennungsrückstände durch einen Rost (18) in einen Aschekasten (19) gelangen und die Abgase der Verbrennung in die erste Zone (3) zurückgeführt werden.

## Claims

1. An apparatus for the purification of exhaust gas on a combustion system, comprising a soot filter (1) which is arranged in an exhaust-gas device, the soot filter being composed essentially of a flexible filter band (4), through which the exhaust gas flows in a first zone (3), and being movable forwards continuously or discontinuously by means of a drive (5) and being renewable, characterized in that the filter band (4) is supported, at least in the first zone (3), by a flexible gas-permeable endless conveyor band (6) absorbing tensile stresses and can be set in motion by the endless conveyor band (6), and in that the filter band (4) and the particles (7) precipitated out of the exhaust gas by it can be jointly burnt in a second zone (8).

2. An apparatus according to claim 1, characterized in that the endless conveyor band (6), in the region of each of its lateral limitations (9), has a perforation (10) over the entire length, in that, during the intended use, the filter band (4) does not cover the perforation (10), and in that the perforation (10) can be brought into engagement with correspondingly designed teeth (11) of the drive (5).

3. An apparatus according to either of claims 1 and 2, characterized in that the drive (5) can be actuated electrically and is connected in a signal-conducting manner to an electronic control unit (12).

4. An apparatus according to claim 3, characterized in that the control unit (12) is connected in a signal-conducting manner to an ignition device (13) within the second zone (8), to an electrically driven fresh-air blower (14) and to a feed device (15) for feeding the particle-laden filter band (4) into the second zone (8).

5. An apparatus according to either of claims 3 and 4, characterized in that the control unit (12) is connected in a signal-conducting manner to at least one sensor which describes an input quantity.

6. An apparatus according to claim 5, characterized in that the input quantity is formed by two pressure transducers (16, 17), and in that one (16) of the pressure transducers is arranged on one side of the filter band (4) in the unfiltered exhaust gas stream and one (17) of the pressure transducers is arranged on the other side of the filter band (4) in the filtered exhaust-gas stream.

7. An apparatus according to any of claims 1 to 6, characterized in that the filter band (4) is deflected at least once in the flow region of the flowing-off exhaust gas in order to enlarge the effective filter surface.

8. An apparatus according to any of claims 1 to 7, characterized in that the particle-laden filter band (4) is guided in the second zone (8) over a grating (18) made of metallic or ceramic material, in that an ash box (19) separable from the soot filter (1) is arranged downstream of the grating (18) in the direction of flow of the blower-air stream and in that the feed device (15) is formed by a conveyor drum, with at least two feed arms (15.1, 15.2) distributed uniformly on the circumference, and in that, during the intended use, the conveyor drum has essentially the same rotational speed as the drive (5) of the endless conveyor band (6).

9. A process for the purification of exhaust gas by means of an apparatus according to any of claims 1 to 8, characterized in that the filter band (4) and the endless conveyor band (6) are guided through an entry lock (21) into the first zone (3) which contains unpurified exhaust gas, in that the filter band (4) and the endless conveyor band (6) are laid one against the other as a result of the different pressures on both sides of the filter band (4) and conveyor band (6), in that the two bands (4, 6) are guided via at least one deflecting roller (23) for the purpose of enlarging the effective filter surface, in that, after the last deflection, the filter band (4) is lifted off from the conveyor band (6) and is guided into a second zone (8), in which the filter band (4) and the particles (7) are burnt by ignition (13) and with the supply of fresh air, and in that the solid combustion residues pass through a grating (18) into an ash box (19) and the exhaust gases from the combustion are returned into the first zone (3).

## Revendications

1. Dispositif d'épuration de gaz sur une installation de combustion, comprenant un filtre à suie (1) situé dans un dispositif d'échappement, le filtre à suie étant formé, essentiellement, par un ruban filtrant (4) flexible traversé par le gaz d'échappement dans une première zone (3) et pouvant être avancé et renouvelé, de manière continue ou discontinue, au moyen d'un entraînement (5), ce dispositif étant caractérisé en ce que le ruban filtrant (4) est soutenu, au moins dans la première zone (3), par une bande transporteuse sans fin (6), flexible, perméable aux gaz et absorbant les efforts de traction et peut être mis en mouvement par cette bande transporteuse sans fin (6), et en ce que le ruban filtrant (4) peut être brûlé dans une deuxième zone (8) en même temps que les particules (7) qu'il a éliminées du gaz d'échappement.

2. Dispositif selon la revendication 1, caractérisé en ce que la bande transporteuse sans fin (6) est pourvue, dans la région de chacune de ses limites latérales (9) et sur toute sa longueur, d'une perforation (10), que le ruban filtrant (4) ne couvre pas la perforation (10) pendant l'utilisation conforme aux prescriptions et que la perforation (10) pouvant être mise en prise avec des dents (11) de l'entraînement (5) qui ont une configuration appropriée.

3. Dispositif selon les revendications 1 à 2, caractérisé en ce que l'entraînement (5) peut être actionné par une commande électrique et est relié par signaux à un dispositif de commande (12) électronique.

4. Dispositif selon la revendication 3, caractérisé en ce que le dispositif de commande (12) est relié, par des liaisons de signalisation, à un dispositif allumeur (13) à l'intérieur de la deuxième zone (8), à un ventilateur (14) d'air frais à commande électrique et à un dispositif d'acheminement (15) du ruban filtrant (4) chargé de particules dans la deuxième zone (8).

5. Dispositif selon les revendications 3 à 4, caractérisé en ce que le dispositif de commande (12) est relié, par une liaison de signalisation, à au moins un capteur qui décrit une grandeur d'entrée.

6. Dispositif selon la revendication 5, caractérisé en ce que la grandeur d'entrée est donnée par deux capteurs de pression (16, 17) et que l'un des capteurs de pression (16) est situé d'un côté du ruban filtrant (4) dans le courant de gaz non filtré et l'autre capteur de pression (17) est situé de l'autre côté du ruban filtrant (4) dans le courant de gaz filtré.

7. Dispositif selon les revendications 1 à 6, caractérisé en ce que le ruban filtrant (4) subit, pour augmenter la surface filtrante efficace, au moins une déviation dans la région où circule le gaz d'échappement.

8. Dispositif selon les revendications 1 à 7, caractérisé en ce que, dans la deuxième zone (8), le ruban filtrant (4) chargé de particules passe par-dessus une grille (18) faite d'une matière métallique ou céramique, qu'une boîte à cendres (19) séparable du filtre à suie (1) est située derrière la grille (18) dans le sens d'écoulement du courant d'air soufflé, que le dispositif d'acheminement (15) est formé par un cylindre de transport pourvu d'au moins deux bras de transport (15.1, 15.2) répartis uniformément sur sa circonférence et que le cylindre de transport a sensiblement la même vitesse que l'entraînement (5) de la bande transporteuse sans fin (6) pendant l'utilisation conforme aux prescriptions.

9. Procédé d'épuration de gaz avec un dispositif selon les revendications 1 à 8, caractérisé en ce que le ruban filtrant (4) et la bande transporteuse sans fin (6) sont conduits dans la première zone (3), qui contient du gaz d'échappement non purifié, à travers une vanne d'entrée (18), que le ruban filtrant (4) et la bande transporteuse sans fin (6) sont appuyés l'un contre l'autre grâce aux pressions différentes qui existent de part et d'autre du ruban filtrant (4) et de la bande transporteuse (6), que le ruban (4) et la bande (6) passent tous les deux par au moins une poulie de déviation (23) afin d'obtenir une augmentation de la surface filtrante active, qu'après la dernière déviation, le ruban filtrant (4) est soulevé et séparé de la bande transporteuse (6) et conduit dans une deuxième zone (8) dans laquelle le ruban filtrant (4) et les particules (7) sont brûlés, après allumage, en présence d'un apport d'air frais, que les résidus solides de la combustion traversent une grille (18) pour arriver dans une boîte à cendres (19) et que les gaz d'échappement de la combustion sont ramenés dans la première zone (3).
